# EUROPEAN PATENT SPECIFICATION

(11) **EP 0 785 452 B1**
(45) Date of publication and mention of the grant of the patent: **28.04.2004**
(21) Application number: 97200095.4
(22) Date of filing: 14.01.1997
(51) Int. Cl.: G02B 7/36

(54) **Focusing device**
Fokussierungsvorrichtung
Dispositif de mise au point

(30) Priority: 18.01.1996 DE 19601644
(43) Date of publication of application: 23.07.1997
(73) Proprietor: DATALOGIC S.p.A., 40012 Lippo di Calderara di Reno (Bologna) (IT)
(72) Inventor: Mazzone,Claudio, I-40056 Crespellano(Bologna) (IT)
(74) Representative: Checcacci, Giorgio

(56) References cited:
- EP-A- 0 620 680
- DE-A- 3 243 920
- US-A- 3 910 695
- US-A- 4 051 529

## Description

The invention relates to a focusing device for a light receiving device according to the preamble of Claim 1.

Focusing devices of the type mentioned here are known. They effect a displacement of a lens device which interacts with the light receiving device and is relatively heavy. It has emerged that focusing devices of this type are thus too sluggish and are often too inaccurate as well.

DE-A-32 43 920 discloses an automatic focus controlling apparatus, wherein a photography lens for forming an image of the object onto a two-dimensional solid state image sensing device is arranged in a fixed position, while the two-dimensional solid state image sensing device is arranged movably in the optical axis direction of the photography lens.

EP-A-620 680 discloses an automatic focusing system comprising a lens system which is fixed in its location along an optical axis and an imager which is movable along the optical axis. A distance measuring device is connected between the lens system and the imager to monitor the location of the imager in relations to the lens system.

US 3,910,695 discloses an automatic focus adjusting device for use in information retrieving apparatus, comprising a lens, an information storing piece having an image bearing surface and means for moving a reflecting member according to a variation of the relative distance between the information storing piece and the lens.

US 4,051,529 discloses a focus control system wherein a light beam is reflected by a movable mirror through one objective lens and then directed to a recording surface of a carrier through another objective lens so that the light beam remains focused on the recording carrier in spite of the deviations in position of the carrier, without moving the objective lens.

The object of the invention is to provide a focusing device of the above mentioned type which overcomes some disadvantages of the prior art.

A focusing device which includes the features cited in Claim 1 is proposed for achieving the object. The focusing device can respond very rapidly due to the fact that the lens device is designed to be stationary and that an actuation device can be used to displace at least one element arranged in the light path and having a mass which is less than that of the lens.

In a preferred embodiment of the focusing device, a light sensor is displaced by the actuation device. Since the said sensor is arranged at the focal point of the focusing device, it may be designed to be significantly smaller than the lens device concentrating the light beam, and this leads to a considerable reduction in mass. The light sensor can be displaced by the actuation device very quickly into the position in which focusing is ensured.

An embodiment of the focusing device is further preferred in which the light sensor is displaced in such a way that the light always impinges perpendicularly on the light-sensitive surface of the light sensor. An identical displacement distance is thus produced for the entire surface area exposed to the incident light, with the result that the same focusing conditions are provided everywhere.

An embodiment of the focusing device is further preferred in which, for the purpose of focusing, the actuation device moves a mirror having a mass which is less than that of the lens. It is ensured in this case, too, that the focusing device responds rapidly, since only relatively light parts have to be moved during focusing.

An embodiment of the focusing device is particularly preferred in which the mirror has two reflecting surfaces which can be exposed to light and enclose between them an obtuse angle of preferably 90°. The incident light is reflected in such a way that the reflected light runs virtually parallel to the direction of incidence. If this mirror is now moved by the actuation device, then the light path is altered by an amount equal to twice the displacement of this mirror. The distances to be handled by the actuation device to effect focusing are thus very short, with the result that focusing can be achieved even more rapidly.

An embodiment of the focusing device is preferred in which the actuation device has a coil and a magnet interacting with the latter, and in addition a drive circuit. The actuation device thus has a very simple structure, is not very susceptible to disturbances and, moreover, can be implemented in a cost-effective manner.

An embodiment of the focusing device is further preferred in which the position sensor detecting the position of the light sensor is a capacitive transducer. The current position of the light sensor can thus be detected in a simple and very precise manner.

An embodiment of the focusing device is particularly preferred in which the light sensor and the position sensor are arranged on one and the same printed circuit board. The focusing device can thus be implemented in a relatively cost-effective and very compact manner.

Further refinements of the invention emerge from the remaining subclaims.

The invention is explained in more detail below using the drawing, in which:
- Figure 1: shows a schematic sketch of a first focusing device having a lens. device and a light sensor;
- Figure 2: shows a perspective view of part of the first focusing device;
- Figure 3: shows an illustration to explain the functioning of the focusing device;
- Figure 4: shows a schematic sketch of a second focusing device having a lens device, a light sensor and also a mirror device;
- Figure 5: shows a modified design of the second focusing device according to Figure 4, and
- Figure 6: shows a perspective view of part of the second focusing device.

The focusing device described below is used together with light receiving devices which serve, for example, to scan information assigned to objects, for example bar codes.

Devices of this type serve to pick up the light reflected from the objects, or from the information zones to be acquired, and to determine therefrom the information which has been read off. It is essential for the precise acquisition of the information that the reflected light is concentrate distinctly within the light receiving device. Focusing devices are used to achieve this.

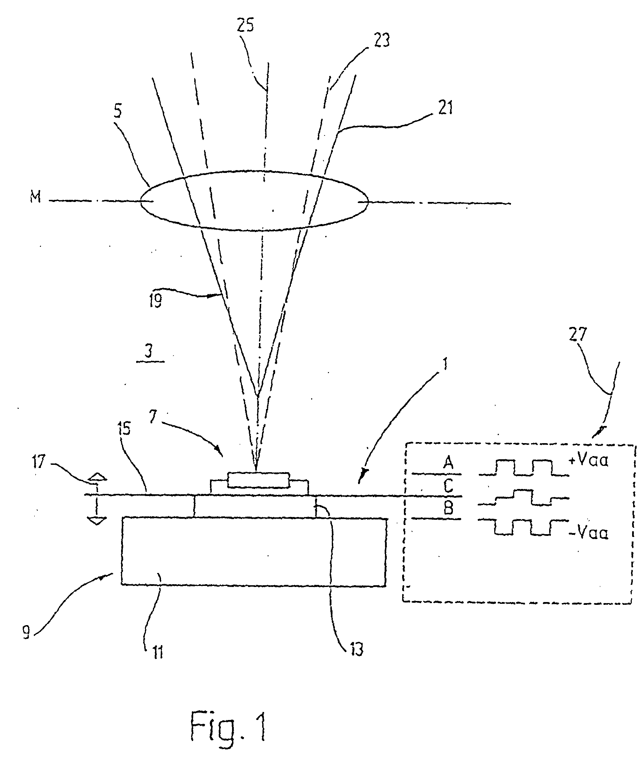

Figure 1 shows a detail of a focusing device 1 of a light receiving device 3, which has a lens device 5 and a light sensor 7 which is designed, for example, as a CCD device (charge-coupled device). The lens device 5 is arranged so as to be fixed in position, while the light sensor 7 is designed to be movable and is provided with an actuation device 9. The actuation device has a magnet 11, which is designed, for example, as a permanent magnet, and a coil 13, to which a variable current can be applied via a drive circuit (not illustrated here). The light sensor 7 is arranged on a carrier board 15 which can be displaced - as indicated by a double arrow 17 - parallel to itself in the direction of the incident light 19. Different light incidence situations, in response to which the focusing device 1 must effect focusing, are provided by continuous lines 21 and dashed lines 23.

Finally, Figure 1 also indicates the direction of light incidence, or the light course, by a dot-dashed line 25 which is perpendicular, during the entire focusing operation, to a plane which coincides with the surface of the light sensor 7.

Figure 1 additionally indicates a position sensor 27, which is designed as a capacitive transducer and has two stationary boards A, B and, in between, a movable board C. The movable board C is formed by a continuation of the carrier board 15 in the case of the exemplary embodiment illustrated here. It is evident from the sketch illustrated in Figure 1 that a modulated voltage signal, in this case a rectangular-waveform signal +Vaa and -Vaa, is applied to the stationary boards A and B. The two voltage signals have an opposite polarity; otherwise, their characteristic over time is identical.

The coil 13 must be coupled to the carrier board 15 in such a way that the carrier board follows every movement of the coil 13; a rigid coupling therefore exists. A movement of the carrier board 15 compulsorily produces a movement of the movable board C of the position sensor 27. It is thus possible to pick off from this movable board C a voltage signal which is a function of the current position of this board. This signal is fed to an evaluation circuit (not illustrated here) which evaluates the signal picked off from the movable board C in such a way that the current position of the carrier board 15 or of the light sensor 7 can be detected and, consequently, it is possible to ensure optimum focusing.

It is also possible to feed the signal of the evaluation circuit to the drive circuit of the actuation device 9 and hence implement a control loop.

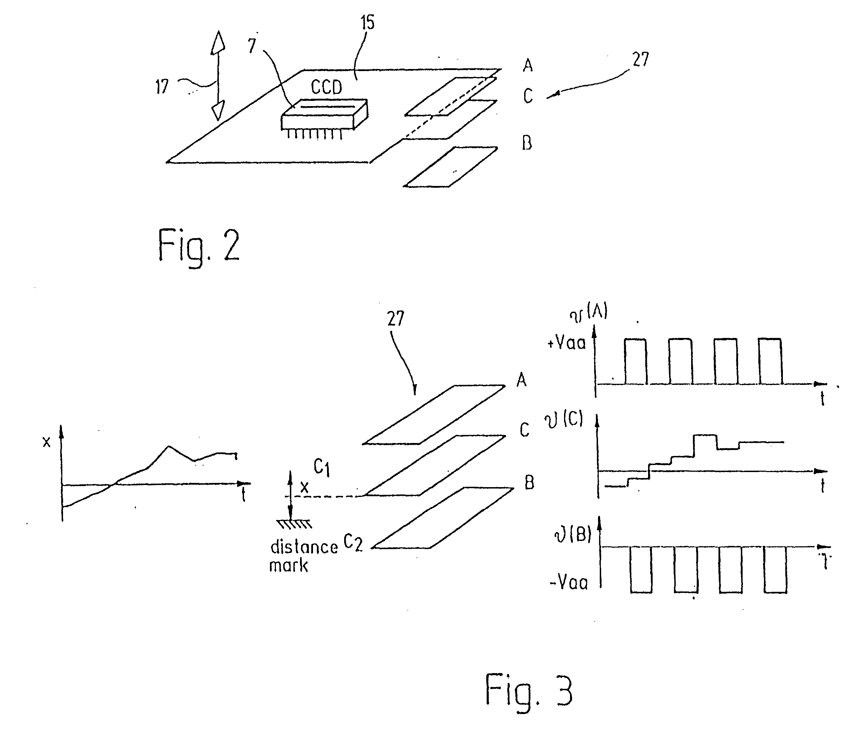

Figure 2 diagrammatically shows in a perspective arrangement a detail of the focusing device 1 illustrated in Figure 1, namely the carrier.board 15, the light sensor 7, the two stationary boards A and B of the position sensor 27 and also the movable board C thereof. It becomes clear in this illustration that the movable board C is part of the carrier board 15. An embodiment is particularly preferred in which the carrier board 15 and the movable board C are of integral design. The carrier board 15 may be part of a printed circuit board.

The correlation between the current position of the movable board C and the signal which con be picked off at this board will be explained using Figure 3.

A diagram illustrating the position x of the movable board C against the time t is represented on the left in Figure 3. The two stationary boards A and B and also the movable board C of the position sensor 27 designed as a capacitive transducer are represented in the centre of Figure 3. A first capacitance C₁ is formed between the stationary board A and the movable board C, and a second capacitance C₂ is formed between the stationary board B and the movable board C.

Different voltage signals are plotted on the right in Figure 3, that is to say, therefore, a characteristic of the voltage v against the time t. The earth potential coincides with the abscissa in all three diagrams.

A rectangular-waveform voltage signal which has the maximum voltage +Vaa and is applied to the stationary board A is represented in the top diagram. On the right in Figure 3, the bottom diagram illustrates against the time t the rectangular-waveform voltage signal which is present across the stationary board B and assumes the value -Vaa as its maximum potential. It is evident that voltage signals of opposite polarity are applied to the two boards A and B.

A displacement of the movable board C in accordance with the distance diagram illustrated on the left in Figure 3 produces across the board C a voltage signal having a characteristic such as the one produced in the centre diagram of the voltage v against the time t.

It is already evident from the roughly sketched illustration in Figure 3 that the voltage signal picked off at the board C corresponds to the displacement of the board which is produced in the distance diagram (distance x against the time t)in Figure 3.

A particularly simple implementation of the actuation device 9 is produced if - as in the case of a loudspeaker device - use is made of a permanent magnet and a coil 13 which is driven by means of a drive circuit and through which current flows. The signal, serving to drive the coil, of the drive circuit can be generated taking account of the signal emitted by the evaluation circuit, the voltage signal which is present across the movable board C being applied to the evaluation circuit. In this way, it is possible to implement a control loop which can generate a control signal from a suitable device in order to establish the optimum focusing position.

The focusing device can have a particularly compact and simple structure, since the position sensor 27 interacts directly with the carrier board 15 of the focusing device 1. It is possible to implement a compact structure, in particular when the carrier board 15 is part of the position sensor 27 and forms the movable board C thereof, and this compact structure leads to the focusing device 1 having a very low mass and hence being very quick to react.

The focusing device is very small when the light sensor 7 and the position sensor 27 are part of a single integrated circuit.

It is particularly advantageous that, in the case of the focusing device illustrated here, the light sensor 7 is displaced parallel to itself, with the result that the light path corresponding to the dot-dashed line 25 is perpendicular to the surface of the light sensor 7 in all positions. The focusing of one of the surface regions of the light sensor 7 simultaneously effects the focusing of all the other surface regions situated in one and the same plane. In other words, the surface regions of the light sensor 7 have the same distance from an imaginary centre plane M of the lens device 5.

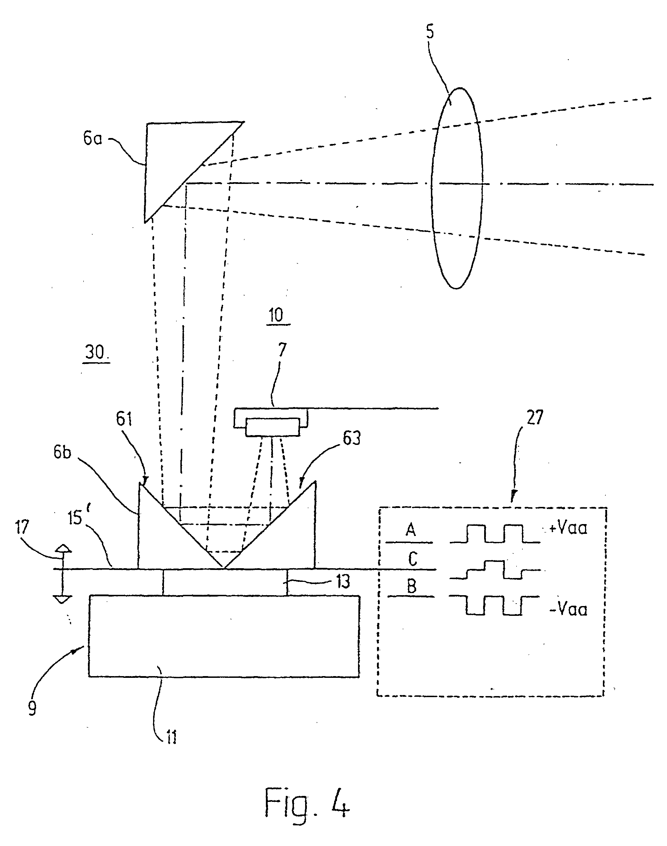

Figure 4 shows a second focusing device 10. Parts of this focusing device which were also illustrated in Figures 1 to 3 are given the same reference symbols; so that reference may be made to the description above.

The focusing device 10 has a light receiving device 30 which includes a lens device 5 and a mirror device which comprises two mirrors in this case. The said mirror device is provided in this case with a first mirror 6a and with a second mirror 6b. The second mirror 6b is distinguished by the fact that it comprises two reflecting surfaces 61 and 63, which can be exposed to light and enclose an obtuse angle of preferably 90°. The result of this is that light beams incident on the second mirror 6b are deflected twice, so that in total a deflection angle of 180° is produced and the incident and reflected light beams run parallel to one another. The beam courses are indicated by dashed lines. The two mirrors 6a and 6b are arranged with respect to one another in such a way that light which is reflected from an object and concentrated by the lens device 5 impinges on a light sensor 7, which is designed in this case, for example, as a CCD device.

The base bodies of the two mirrors 6a and 6b can be designed as desired; it is therefore possible to use customary mirror boards. Especial success has been obtained by base bodies of prismatic design - also illustrated in this case - which have at least one reflective outer surface. The mirror 6a has a single prism, the mirror 6b has two prisms or a double prism as base body.

The lens device 5 of this focusing device 10 is arranged fixed in position. The second mirror 6b is coupled to an actuation device 9, which includes, for example, a magnet 11, which is designed as a permanent magnet, and a coil 13, to which a variable current can be applied via a drive circuit (not illustrated here). The second mirror 6b is fixed on a carrier board 15', which - as indicated by a double arrow 17 - can be displaced parallel to itself.

The actuation device 9 could also be coupled to the first mirror 6a or alternatively to the light sensor 7. The latter variant has already been explained using Figures 1 to 3.

The second mirror 6b which can be displaced for focusing interacts with a position sensor 27, which is designed as a capacitive transducer and has two stationary boards A and B and, in between, a movable board C. A position sensor 27 of the type mentioned here has been explained in detail using Figures 1 to 3, so that reference may be made to the description relating to these figures.

It becomes clear that when the second mirror 6b is displaced with the aid of the actuation device 9 by a distance x, the light path is altered by a distance of 2x. Therefore, particularly small movements are needed here to effect focusing.

The movable mirror 6b, in particular, may be designed to be very light, since low-mass plastic parts can form the base body of the mirror 6b and only the reflecting surfaces which can be exposed to light have to be designed to be highly reflective, and this can be achieved, for example, by means of metal vapour deposition.

On account of the special surface of the mirror, only a relatively small displacement distance is required, with the result that the focusing device 10 permits very rapid focusing.

It is evident from Figure 4 that the focusing device 10 is constructed such that incident light reaches the first mirror 6a via the lens device 5 and, from this mirror, reaches the second mirror 6b. The incident light is diverted to the light sensor 7 by the two reflecting surfaces 61 and 63.

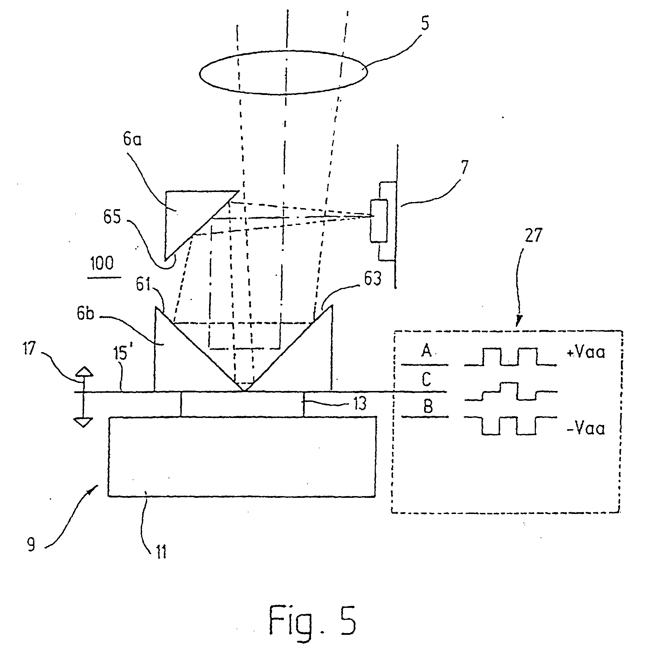

It is clearly discernible in Figure 5 that the first mirror 6a, which in this case is of essentially prismatic design, can also be arranged in the light path between the light sensor 7 and the second mirror 6b. The light which is incident upon the focusing device illustrated in Figure 5 in this case reaches the second mirror 6b having the two reflecting surfaces 61 and 63 via the lens device 5 and is reflected back from this mirror onto the reflecting surface 65 of the first mirror 6a, and from there finally reaches the light sensor 7.

In the case of this refinement of the focusing device 100, too, the second mirror 6b is displaced by an actuation device 9 which has a magnet 11, which is designed, for example, as a permanent magnet, and a coil 13, through which a variable current flows.

The second mirror 6b is arranged in this case, as in the case of the exemplary embodiment according to Figure 4, on a carrier board 15', which - as indicated by a double arrow 17 - can be displaced parallel to itself.

The movable second mirror 6b is once more assigned a position sensor 27, which is designed as a capacitive transducer and has two stationary boards A and B and, in between, a movable board C. The structure and mode of operation correspond to the position sensors 27 explained using Figures 1 to 4, so that it is not necessary to elaborate here.

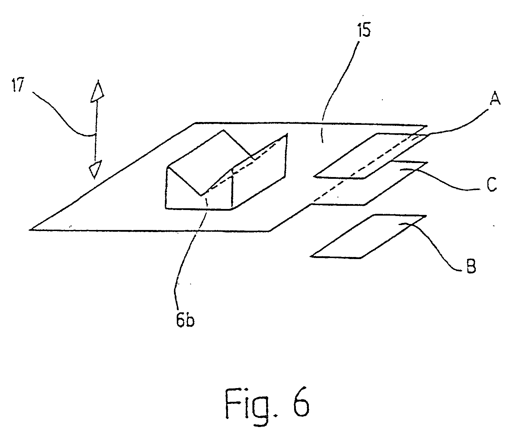

Figure 6 diagrammatically shows in a perspective arrangement a detail of the focusing devices 10 and 100 which are illustrated in Figures 4 and 5. The carrier board 15', which carries the second mirror 6b and can be displaced by means of the actuation device 9 (not illustrated here), as illustrated by a double arrow 17, is clearly discernible. The carrier board 15' exhibits here the movable board C, which interacts with the stationary boards A and B of the position sensor 27 which is designed as a transducer. The board C is preferably of integral design with the carrier board 15'.

In this case, the carrier board 15' may also be part of a printed circuit board.

The correlation between the current position of the movable board C and the signal which can be picked off at this board corresponds to that which has been represented in detail using Figures 2 and 3, so that it is not necessary to elaborate here. Reference is made instead to the description relating to these figures.

Finally, it becomes clear that a focusing device can also be provided with a plurality of actuation devices, which act, on the one hand, on one or more of the mirrors and, if necessary, additionally on the carrier board, too, on which the light sensor 7 of the focusing devices 10 and 100 is fitted. Consequently, it is possible to add the displacements, with the result that a particularly large depth of field range is produced for a focusing device of the type mentioned here.

## Claims

1. Focusing device for a light receiving device, comprising:
- at least one lens device (5);
- at least one element (7, 6b) arranged in a light path (25) and having a mass which is less than that of the lens device (5);
- an actuation device (9) used to displace said at least one element (7, 6b) along the light path (25);
- a position sensor (27) adapted to detect the position of said at least one displaceable element (7, 6b);
**characterized in that** said position sensor (27) comprises a movable element which is of integral design with said at least one displaceable element (7, 6b).

2. Focusing device according to claim 1, wherein said at least one element (7, 6b) arranged in the light path (25) is a light sensor (7).

3. Focusing device according to claim 2, wherein the light sensor (7) comprises a pluality of light sensitive surface regions which remains aligned in such a way that they are contemporaneously illuminated by light in a substantially perpendicular way when the light sensor (7) is displaced by the actuation device (9).

4. Focusing device according to claim 2, wherein the light sensor is a CCD.

5. Focusing device according to claim 1, wherein said at least one element (7, 6b) arranged in the light path (25) is a mirror (6b) having two reflecting surfaces (61, 63) which can be exposed to light and enclose between them an angle of substantially 90°.

6. Focusing device according to claim 1, wherein said at least one element (7, 6b) is arranged on a carrier board (15, 15') which is displaceable by means of the actuation device (9).

7. Focusing device according to claim 1, wherein the position sensor (27) comprises a capacitive transducer.

8. Focusing device according to claim 7, wherein the capacitive transducer comprises two stationary boards (A, B) and a movable board (C) therebetween.

9. Focusing device according to claims 6 and 8, wherein the movable board (C) of the capacitive transducer is part of the carrier board (15, 15').

10. Focusing device according to claims 6 and 8, wherein the movable board (C) of the capacitive transducer and the carrier board are of integral design.

11. Focusing device according to claim 6, wherein the carrier board (15, 15') is part of a printed circuit board.

12. Focusing device according to claim 1, wherein the actuation device (9) comprises a coil (13) which interacts with a drive circuit and a magnet (11) which interacts with the coil (13).

13. Focusing device according to claim 8, wherein a rectangular-waveform voltage signal is applied to the two stationary boards (A, B) of the capacitive transducer (9).

14. Focusing device according to claim 8, wherein rectangular-waveform voltage signal of opposite polarity are applied to the two stationary boards (A, B) of the capacitive transducer (9).

15. Focusing device according to claim 8, wherein a signal is picked off from the movable board (C) and is fed to an evaluation circuit.

16. Focusing device according to claim 12, wherein an output signal is picked off from the evaluation circuit and fed to the actuation device (9) so as to implementing a control loop.

## Patentansprüche

1. Fokussiereinrichtung für eine Lichtempfängervorrichtung, mit:
wenigstens einer Linsenvorrichtung (5);
wenigstens einem Element (7, 6b), das in einem Lichtpfad (25) angeordnet ist und eine Masse hat, die geringer ist als die der Linsenvorrichtung (5);
einer Betätigungsvorrichtung (9), die zum Verschieben des wenigstens einen Elementes (7, 6b) entlang des Lichtpfad (25) verwendet wird;
einem Positionssensor (27), der die Position des wenigstens einen verschiebbaren Elements (7, 6b) erfassen kann;
**dadurch gekennzeichnet, daß** der Positionssensor (27) ein bewegliches Element aufweist, das mit dem wenigstens einen verschiebbaren Element (7, 6b) fest verbunden ist.

2. Fokussiereinrichung nach Anspruch 1, wobei das wenigstens eine Element (7, 6b), das in dem Lichtpfad (25) angeordnet ist, ein Lichtsensor (7) ist.

3. Fokussiereinrichtung nach Anspruch 2, wobei der Lichtsensor (7) mehrere lichtempfindliche Oberflächenbereiche aufweist, die derart ausgerichtet bleiben, daß sie gleichzeitig und im wesentlichen senkrecht von Licht beleuchtet werden, wenn der Lichtsensor (7) von der Betätigungsvorrichtung (9) verschoben wird.

4. Fokussiereinrichtung nach Anspruch 2, wobei der Lichtsensor eine CCD-Einrichtung ist.

5. Fokussiereinrichtung nach Anspruch 1, wobei das wenigstens eine Element (7, 6b), das in dem Lichtpfad (25) angeordnet ist, ein Spiegel (6b) ist, der zwei reflektierende Oberflächen (61, 63) aufweist, die beleuchtet werden können und zwischen sich einen Winkel von im wesentlichen 90° einschließen.

6. Fokussiereinrichtung nach Anspruch 1, wobei das wenigstens eine Element (7, 6b) auf einer Trägerplatte (15, 15') angeordnet ist, die mit Hilfe der Betätigungsvorrichtung (9) verschiebbar ist.

7. Fokussiereinrichtung nach Anspruch 1, wobei der Positionssensor (27) einen kapazitiven Wandler aufweist.

8. Fokussiereinrichtung nach Anspruch 7, wobei der kapazitiven Wandler zwei stationäre Platten (A, B) und eine bewegliche Platte (C) zwischen diesen aufweist.

9. Fokussiereinrichtung nach den Ansprüchen 6 und 8, wobei die bewegliche Platte (C) des kapazitiven Wandlers Teil der Trägerplatte (15, 15') ist.

10. Fokussiereinrichtung nach den Ansprüchen 6 und 8, wobei die bewegliche Platte (C) des kapazitiven Wandlers und die Trägerplatte fest verbunden sind.

11. Fokussiereinrichtung nach Anspruch 6, wobei die Trägerplatte (15, 15') Teil einer gedruckten Schaltungsplatte ist.

12. Fokussiereinrichtung nach Anspruch 1, wobei die Betätigungsvorrichtung (9) eine Spule (13), die mit einem Ansteuerschaltkreis zusammenwirkt, und einen Magneten (11), der mit der Spule (13) zusammenwirkt, aufweist.

13. Fokussiereinrichtung nach Anspruch 8, wobei ein Rechteckspannungssignal an die zwei stationären Platten (A, B) des kapazitiven Wandlers (9) angelegt wird.

14. Fokussiereinrichtung nach Anspruch 8, wobei Rechteckspannungssignale entgegengesetzter Polarität an die zwei stationären Platten (A, B) des kapazitiven Wandlers (9) angelegt werden.

15. Fokussiereinrichtung nach Anspruch 8, wobei von der beweglichen Platte (C) ein Signal aufgenommen und einem Bewertungsschaltkreis zugeführt wird.

16. Fokussiereinrichtung nach Anspruch 12, wobei von dem Bewertungsschaltkreis ein Ausgangssignal aufgenommen und der Betätigungssvorrichtung zugeführt wird, um eine Regelschleife zu realisieren.

## Revendications

1. Dispositif de mise au point pour un récepteur de lumière, comprenant :
- au moins une lentille (5);
- au moins un élément (7, 6b) disposé dans le trajet lumineux (25) et ayant une masse inférieure à celle de la lentille (5)
- un dispositif de mise en marche (9) utilisé pour déplacer ledit au moins un élément (7, 6b) le long du trajet lumineux (25) ;
- un capteur de position (27) adapté pour détecter la position dudit au moins un élément déplaçable (7, 6b);
**caractérisé en ce que** ledit capteur de position (27) comprend un élément mobile solidaire dudit au moins un élément déplaçable (7, 6b).

2. Dispositif de mise au point selon la revendication 1, dans lequel ledit au moins un élément (7, 6b) disposé dans le trajet lumineux (25) est un capteur de lumière (7).

3. Dispositif de mise au point selon la revendication 2, dans lequel le capteur de lumière (7) comprend une pluralité de zones de surface sensible à la lumière qui restent alignées de telle sorte qu'elles sont simultanément illuminées par la lumière de manière sensiblement perpendiculaire lorsque le capteur de lumière (7) est déplacé par le dispositif de mise en marche (9).

4. Dispositif de mise au point selon la revendication 2, dans lequel le capteur de lumière est un CCD.

5. Dispositif de mise au point selon la revendication 1, dans lequel ledit au moins un élément (7, 6b) disposé dans le trajet lumineux (25) est un miroir (6b) ayant deux surfaces réfléchissantes (61, 63) qui peuvent être exposées à la lumière et qui maintiennent entre elles un angle de sensiblement 90°.

6. Dispositif de mise au point selon la revendication 1, dans lequel ledit au moins un élément (7, 6b) est disposé sur un panneau porteur (15, 15') qui est déplaçable au moyen du dispositif de mise en marche (9).

7. Dispositif de mise au point selon la revendication 1, dans lequel le capteur de position (27) comprend un transducteur capacitif.

8. Dispositif de mise au point selon la revendication 7, dans le quel le transducteur capacitif comprend deux panneaux stationnaires (A, B) et un panneau mobile (C) entre eux.

9. Dispositif de mise au point selon les revendications 6 et 8, dans lequel le panneau mobile (C) du transducteur capacitif fait partie du panneau porteur (15, 15').

10. Dispositif de mise au point selon les revendications 6 et 8, dans lequel le panneau mobile (C) du transducteur capacitif est solidaire du panneau porteur.

11. Dispositif de mise au point selon la revendication 6, dans lequel le panneau porteur (15, 15') fait partie d'une carte électronique.

12. Dispositif de mise au point selon la revendication 1, dans lequel le dispositif de mise en marche (9) comprend un enroulement 13 qui interagit avec un circuit d'entraînement et un aimant (11) qui interagit avec l'enroulement (13).

13. Dispositif de mise au point selon la revendication 8, dans lequel un signal de tension de forme rectangulaire est appliqué aux deux panneaux stationnaires (A, B) du transducteur capacitif (9).

14. Dispositif de mise au point selon la revendication 8, dans lequel des signaux de tension de forme rectangulaire et de polarité opposée sont appliqués aux deux panneaux stationnaires (A, B) du transducteur capacitif (9).

15. Dispositif de mise au point selon la revendication 8, dans lequel un signal est prélevé depuis le panneau mobile (C) et introduit dans un circuit d'évaluation.

16. Dispositif de mise au point selon la revendication 12, dans lequel un signal de sortie est prélevé depuis le circuit d'évaluation et introduit dans le dispositif de mise en marche (9) de façon à effectuer une boucle de contrôle.
